# EUROPEAN PATENT APPLICATION

(11) **EP 4 414 263 A1**
(43) Date of publication of application: **14.08.2024**
(21) Application number: 22877680.3
(22) Date of filing: 06.10.2022
(51) Int. Cl.: B64C 39/02, B64C 27/08, B64D 27/08, B64D 27/24

(54) **FLIGHT DEVICE**

(30) Priority: 07.10.2021 JP 2021165734
(71) Applicant: Ishikawa Energy Research Co., Ltd., Ota-shi, Gunma 379-2304 (JP)
(72) Inventor: ISHIKAWA, Mitsuru, Ota-shi, Gunma 379-2304 (JP)
(74) Representative: Plasseraud IP
(86) International application number: PCT/JP2022/037465
(87) International publication number: WO 2023/058721

(57) **Abstract**

A flight device in which a mechanism for transmitting power is simplified is provided. The flight device 10 includes an airframe 19, main rotors 14, an engine 30, and power transmission shafts 25. The main rotors 14 are rotated to generate drive force that causes the airframe 19 to lift. The engine 30 includes crankshafts. The power transmission shafts 25 are connected to the crankshafts. Moreover, the engine 30 rotates the main rotors 14 via the power transmission shafts 25. The power transmission shafts 25 are tilted with respect to a second direction D2.

## Description

### TECHNICAL FIELD

The present invention relates to a flight device, and relates particularly to a socalled parallel hybrid flight device in which a main rotor is drivingly driven by an engine and a sub-rotor is rotated by a motor.

### BACKGROUND ART

An unmanned flight device capable of flying in the air has been conventionally known. Such a flight device can fly in the air by using thrusts of rotors that rotate about vertical axes.

For example, the field of transport, the field of surveying, the field of imaging, and the like are conceivable as the fields to which such a flight device is applied. When the flight device is applied to such fields, a surveying device or an imaging device is attached to the flight device. Applying the flight device to such fields enables transport, imaging, and surveying to be performed in a region in which a person cannot enter by causing the flight device to fly in such regions. Inventions relating to such a flight device are described in, for example, Patent Literature 1 and Patent Literature 2.

In a general flight device, the above-mentioned rotors are rotated by electric power supplied from a storage battery mounted in the flight device. However, since a supply amount of energy is not always sufficient in the supply of electric power by the storage battery, a flight device carrying an engine has appeared to achieve continuous flight over a long period. In such a flight device, a power generator is rotated by drive force of the engine, and the rotors are rotationally driven by electric power generated by this power generator. Since the engine and the power generator are connected in series in a path in which energy is supplied from a power source to the rotors, the flight device with such a configuration is also referred to as series drone. Performing imaging and surveying by using such a flight device enables imaging and surveying to be performed over a wide area. For example, Patent Literature 3 describes a flight device carrying an engine.

### PRIOR ART LITERATURES

### PATENT LITERATURES

Patent Literature 1: Japanese Patent Application Publication No. 2012-51545
Patent Literature 2: Japanese Patent Application Publication No. 2014-240242
Patent Literature 3: Japanese Patent Application Publication No. 2011-251678

### SUMMARY OF THE INVENTION

### PROBLEMS TO BE SOLVED BY THE INVENTION

However, in the prior flight devices described above, there is a room for improvement in a mechanism of a drive system. Moreover, there is a room for improvement from a viewpoint of optimizing weight distribution.

The present invention has been made in view of the above-mentioned circumstances, and an object of the present invention is to provide a flight device in which a mechanism for transmitting power is simplified.

### MEANS FOR SOLVING THE PROBLEMS

A flight device of the present invention includes an airframe, a main rotor, an engine, and a power transmission shaft, the main rotor is rotated to generate drive force that causes the airframe to lift, the engine includes a crankshaft, the power transmission shaft is connected to the crankshaft, the engine rotates the main rotor via the power transmission shaft, when a direction in which the flight device moves forward is referred to as first direction and a direction orthogonal to the first direction is referred to as second direction, the power transmission shaft is tilted with respect to the second direction.

### EFFECTS OF THE INVENTION

The flight device of the present invention includes the airframe, the main rotor, the engine, and the power transmission shaft, the main rotor is rotated to generate the drive force that causes the airframe to lift, the engine includes the crankshaft, the power transmission shaft is connected to the crankshaft, the engine rotates the main rotor via the power transmission shaft, when the direction in which the flight device moves forward is referred to as first direction and the direction orthogonal to the first direction is referred to as second direction, the power transmission shaft is tilted with respect to the second direction. According to the flight device of the present invention, since the main rotor is rotated via the power transmission shaft connected to the crankshaft of the engine, a gear between the crankshaft and the power transmission shaft can be eliminated. Accordingly, it is possible to simplify the structure of a drive system of the flight device and reduce loss of power due to the gear.

### BRIEF DESCRIPTION OF THE DRAWINGS

[Fig. 1] Fig. 1 is a schematic diagram illustrating a flight device according to an embodiment of the present invention.
[Fig. 2] Fig. 2 is a diagram illustrating the flight device according to the embodiment of the present invention, and is a block diagram illustrating a connection configuration of the various units.
[Fig. 3] Fig. 3 is a diagram illustrating a configuration and arrangement of an engine in the flight device according to the embodiment of the present invention.
[Fig. 4] Fig. 4 is a schematic diagram illustrating a flight device according to another mode of the present invention.

### MODE FOR CARRYING OUT THE INVENTION

A configuration of a flight device of the present embodiment is described below with reference to the drawings. In the following description, parts with the same configurations are denoted by the same reference numerals, and repeated description is omitted. Note that, although directions of up, down, front, rear, left, and right are used in the following description, these directions are for convenience of description. Moreover, the flight device 10 is also referred to as drone.

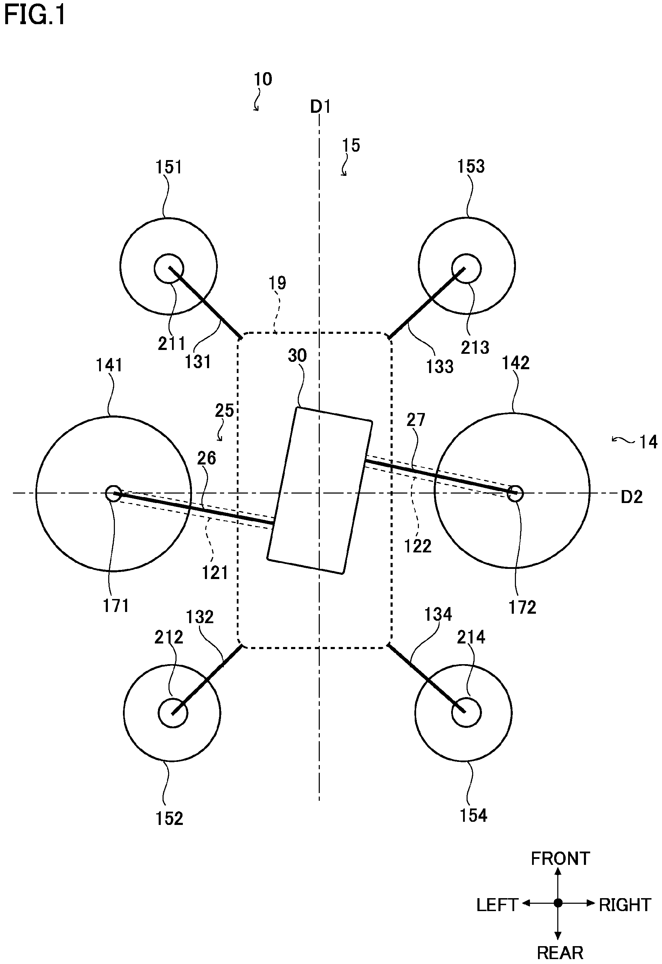

Fig. 1 is a schematic diagram illustrating the flight device 10. In this drawing, a first direction D 1 is a direction in which the flight device 10 moves forward or backward. A second direction D2 is a direction orthogonal to the first direction D1. In this description, the first direction D1 is the front-rear direction, and the second direction D2 is the left-right direction.

The flight device 10 includes an airframe 19, main rotors 14, an engine 30, and power transmission shafts 25. The flight device 10 is a parallel hybrid drone that includes two parallel drive systems of an electric drive system and a mechanical drive system. The electric drive system is a drive system that rotates motors 21 and sub-rotors 15 to be described later. The mechanical drive system is a drive system that rotates the main rotors 14 to be described later.

The airframe 19 is a main body that supports various devices forming the flight device 10, and is made of a synthetic resin, a metal, or a composite material of the synthetic resin and the metal.

The main rotors 14 rotate to generate drive force that causes the airframe 19 to lift. The main rotors 14 include a first main rotor 141 configured to be rotated by power transmitted via a first power transmission shaft 26 to be described later and a second main rotor 142 configured to be rotated by power transmitted via a second power transmission shaft 27 to be described later. The first main rotor 141 is arranged on the left side of the airframe 19. The second main rotor 142 is arranged on the right side of the airframe 19. In this case, the rotating directions of the first main rotor 141 and the second main rotor 142 are opposite to each other, and the first main rotor 141 and the second main rotor 142 rotate at the same rotating speed.

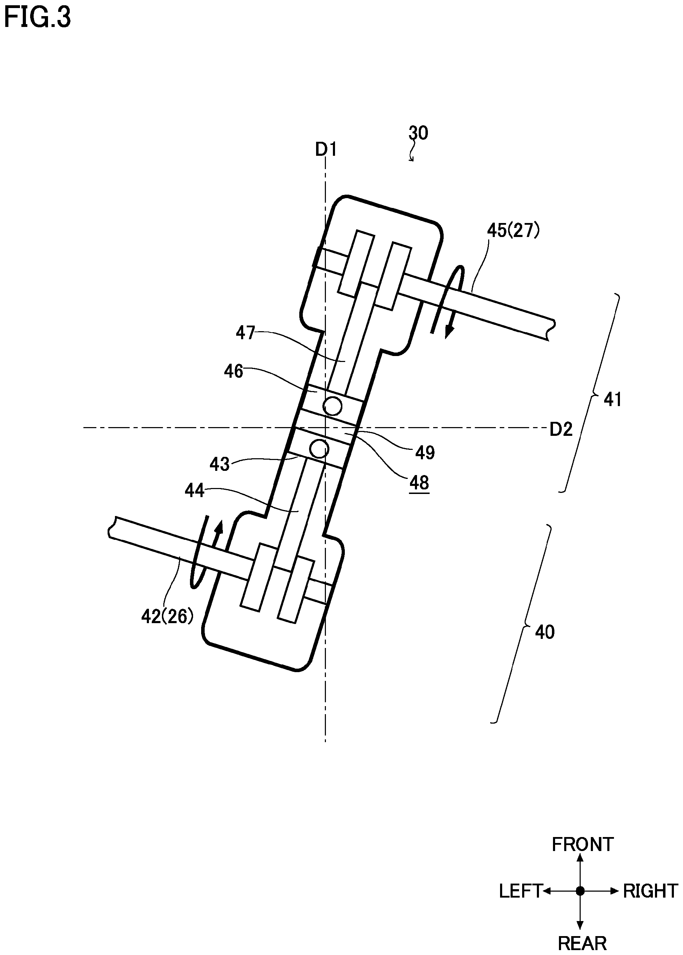

The engine 30 mechanically rotates the main rotors 14 via the power transmission shafts 25. The engine 30 is housed in the airframe 19 and rotates the first main rotor 141 and the second main rotor 142 at a predetermined speed. The first main rotor 141 and the second main rotor 142 are drivingly connected to the engine 30 by the power transmission shafts 25 and the like to be described later. Furthermore, as described later with reference to Fig. 3, the engine 30 includes a first engine part 40 and a second engine part 41.

The power transmission shafts 25 includes the first power transmission shaft 26 connected to a first crankshaft 42 and the second power transmission shaft 27 connected to a second crankshaft 45.

The first power transmission shaft 26 is, for example, a steel rod. An end portion of the first power transmission shaft 26 on the airframe 19 side is connected to a drive shaft of the engine 30, and an outer end of the first power transmission shaft 26 is connected to a gear 171. The gear 171 is, for example, a bevel gear, and converts the transmitted rotating force to rotating force about a vertical axis. The first main rotor 141 is rotated by such rotating force. The first power transmission shaft 26 is housed in a first main frame 121. The first main frame 121 is a supporting member that connects the engine 30 and the first main rotor 141 to each other.

A schematic configuration of the second power transmission shaft 27 is substantially the same as that of the first power transmission shaft 26. An end portion of the second power transmission shaft 27 on the airframe 19 side is connected to a drive shaft of the engine 30, and an outer end of the first power transmission shaft 26 is connected to a gear 172. A configuration of the gear 172 is similar to the gear 171. The first power transmission shaft 26 is housed in a second main frame 122. The second main frame 122 is a supporting member that connects the engine 30 and the second main rotor 142 to each other.

The flight device 10 includes the sub-rotors 15. The sub-rotors 15 includes a sub-rotor 151 to a sub-rotor 154.

The sub-rotor 151 is arranged on the front-left side of the airframe 19, is connected to the airframe 19 via a sub-frame 131, and is rotated by a motor 211.

The sub-rotor 152 is arranged on the rear-left side of the airframe 19, is connected to the airframe 19 via a sub-frame 132, and is rotated by a motor 212.

The sub-rotor 153 is arranged on the front-right side of the airframe 19, is connected to the airframe 19 via a sub-frame 133, and is rotated by a motor 213.

The sub-rotor 154 is arranged on the rear-right side of the airframe 19, is connected to the airframe 19 via a sub-frame 134, and is rotated by a motor 214.

In the present embodiment, the first power transmission shaft 26 and the second power transmission shaft 27 are tilted with respect to the second direction D2. Moreover, the first power transmission shaft 26 and the second power transmission shaft 27 are substantially parallel to each other.

Specifically, the first power transmission shaft 26 is arranged to be tilted forward while extending toward the left side. This allows a crankshaft being the drive shaft of the engine 30 to be used as the first main frame 121 as it is. Accordingly, only the gear 171 is present between the engine 30 and the first main rotor 141 as a transmission device. This can simplify a transmission mechanism present between the engine 30 and the first main rotor 141, and reduce loss of drive energy.

Such matters also apply to the second main frame 122. Specifically, the second power transmission shaft 27 is tilted rearward while extending toward the right side. This allows the drive shaft of the engine 30 to be used as the second main frame 122 as it is. Accordingly, only the gear 172 is present between the engine 30 and the second main rotor 142 as a transmission device. This can simplify a transmission mechanism present between the engine 30 and the second main rotor 142, and reduce loss of drive energy.

Furthermore, the rotation center of the first main rotor 141 and the rotation center of the second main rotor 142 can be arranged along the second direction D2. Accordingly, it is possible to configure the configuration of the flight device 10 to be line-symmetric with respect to the first direction D1 and optimize weight distribution.

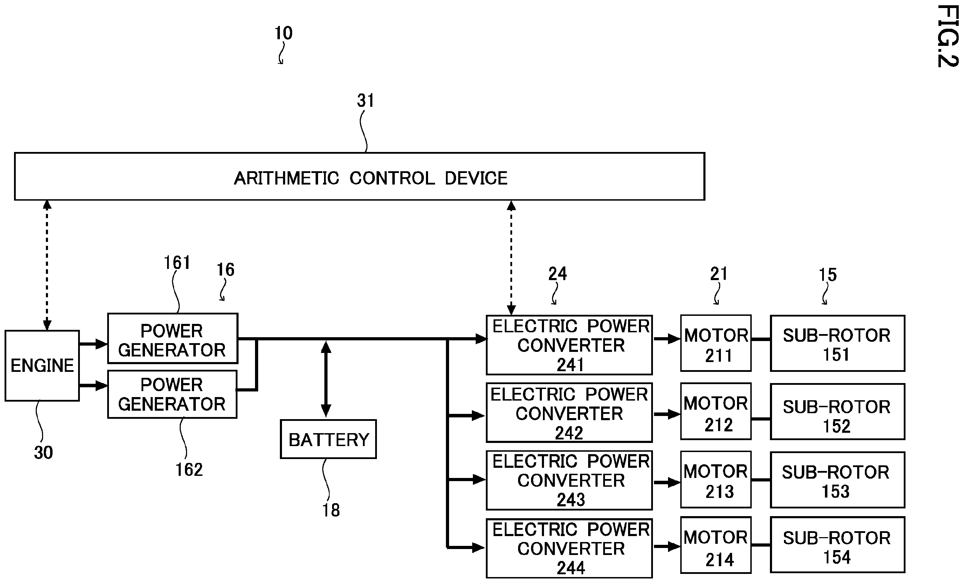

Fig. 2 is a diagram illustrating the flight device 10, and is a block diagram illustrating a connection configuration of various units.

The flight device 10 includes an arithmetic control unit 31, the engine 30, power generators 16, a battery 18, electric power converters 24, the motors 21, and the sub-rotors 15.

The arithmetic control unit 31 includes a CPU, a ROM, a RAM, and the like, and controls behaviors of various devices forming the flight device 10 based on inputs from various types of sensors and controllers that are not illustrated herein. Moreover, the arithmetic control unit 31 is also a flight controller that controls the number of revolutions of each of the main rotors 14 and the sub-rotors 15 based on the inputs from the various types of sensors.

The engine 30 operates based on an input signal from the arithmetic control unit 31, and generates energy for causing the flight device 10 to fly. A specific configuration of the engine 30 is described later with reference to Fig. 3.

The power generators 16 are devices that generate electric power by using part of the drive force of the engine 30, and includes a power generator 161 and a power generator 162. The power generator 161 is driven by the first engine part 40 of the engine 30 to be described later. The power generator 162 is driven by the second engine part 41 of the engine 30 to be described later.

The battery 18 is provided between the power generators 16 and the electric power converters 24. The battery 18 is charged by the power generators 16. Electric power discharged from the battery 18 is supplied to the electric power converters 24 to be described later.

The electric power converters 24 are provided to correspond to the respective sub-rotors 15. Converters and Inverters that temporarily convert AC electric power supplied from the power generator 162 to DC electric power and then convert the DC electric power to AC electric power of a predetermined frequency can be adopted as the electric power converters 24. Moreover, inverters that convert DC electric power supplied from the battery 18 to a predetermined frequency can be adopted as the electric power converters 24. Specifically, the electric power converters 24 includes an electric power converter 241, an electric power converter 242, an electric power converter 243, and an electric power converter 244.

The motors 21 are provided to correspond to the respective sub-rotors 15, and includes the motor 211, the motor 212, the motor 213, and the motor 214. The motor 211, the motor 212, the motor 213, and the motor 214 rotate at predetermined speeds by using electric power supplied from the electric power converter 241, the electric power converter 242, the electric power converter 243, and the electric power converter 244, respectively.

As described above, the sub-rotors 15 include the sub-rotor 151, the sub-rotor 152, the sub-rotor 153, and the sub-rotor 154. The sub-rotor 151, the sub-rotor 152, the sub-rotor 153, and the sub-rotor 154 are rotated by the motor 211, the motor 212, the motor 213, and the motor 214, respectively.

Operations of the flight device 10 are briefly described. The flight device 10 operates in a hovering state, an ascending/descending state, or a horizontal movement state.

In the hovering state, the flight device 10 rotates the main rotors 14 by using the drive force generated by the engine 30 based on an instruction from the arithmetic control unit 31, and the flight device 10 is lifted to a predetermined position in the air. In this case, each of the sub-rotors 15 is rotated based on an instruction from the arithmetic control unit 31. The arithmetic control unit 31 sets the rotation speed of each of the motors 21 and the sub-rotors 15 to a predetermined speed by controlling a corresponding one of the electric power converters 24 such that the flight device 10 can maintain predetermined altitude and attitude.

In the ascending/descending state, the flight device 10 ascends or descends by controlling the number of revolutions of the engine 30. Also in this case, the arithmetic control unit 31 sets the rotation speed of each of the motors 21 and the sub-rotors 15 to a predetermined speed by controlling a corresponding one of the electric power converters 24 such that the flight device 10 can maintain predetermined altitude and attitude.

In the horizontal movement state, the arithmetic control unit 31 sets the flight device 10 to a tilted state by controlling each of the electric power converters 24 to control the number of revolutions of a corresponding set of the motor 21 and the sub-rotor 15. Also in this case, the arithmetic control unit 31 rotates the main rotors 14 at a predetermined speed by controlling a drive state of the engine 30.

Fig. 3 is a diagram illustrating a configuration and arrangement of the engine 30 in the flight device 10.

The engine 30 includes the first engine part 40 and the second engine part 41. The first engine part 40 and the second engine part 41 are arranged to be opposed to each other, the first engine part 40 is arranged on the rear-left side, and the second engine part 41 is arranged on the front-right side.

The first engine part 40 includes a first piston 43 configured to reciprocate, the first crankshaft 42 configured to convert a reciprocating motion of the first piston 43 to a rotating motion, and a first connecting rod 44 configured to rotatably link the first piston 43 and the first crankshaft 42 to each other.

The second engine part 41 includes a second piston 46 configured to reciprocate, the second crankshaft 45 configured to convert a reciprocating motion of the second piston 46 to a rotating motion, and a second connecting rod 47 configured to rotatably link the second piston 46 and the second crankshaft 45 to each other.

The first piston 43 of the first engine part 40 and the second piston 46 of the second engine part 41 share a combustion chamber 48. In other words, the first piston 43 and the second piston 46 reciprocate inside one communicating cylinder. Accordingly, it is possible to reduce a stroke amount and achieve a high expansion ratio of a mixture gas in the combustion chamber 48 by causing the first engine part 40 and the first piston 43 to simultaneously stroke toward a center portion.

Although not illustrated herein, a volume space communicating with the combustion chamber 48 is formed in the engine 30, and a spark plug is arranged in this volume space. Moreover, an intake port and an exhaust port that are not illustrated herein are formed in the combustion chamber 48. An air-fuel mixture including fuel such as gasoline is introduced into the combustion chamber 48 from the intake port, and an exhaust gas after combustion is exhausted from the combustion chamber to the outside via the exhaust port.

The engine 30 with the above-mentioned configuration operates as follows. First, in an intake stroke, the first piston 43 and the second piston 46 move inside a cylinder 49 from a center portion toward the outer sides to introduce the air-fuel mixture being a mixture of fuel and air into the cylinder 49. Next, in a compression stroke, the first piston 43 and the second piston 46 are pushed toward the center portion by inertia of the rotating first crankshaft 42 and second crankshaft 45, and the air-fuel mixture is compressed inside the cylinder 49. Next, in a combustion stroke, the not-illustrated spark plug ignites the air-fuel mixture in the combustion chamber 48, and the air-fuel mixture combusts inside the cylinder 49. This causes the first piston 43 and the second piston 46 to be pushed to outer end portions which are bottom dead centers. Then, in an exhaust stroke, the first piston 43 and the second piston 46 are pushed toward the inner side by the inertia of the rotating first crankshaft 42 and second crankshaft 45, and the gas that is present inside the cylinder 49 after the combustion is exhausted to the outside.

In the engine 30, the stroke can be divided between two pistons of the first piston 43 and the second piston 46 that reciprocate inside one cylinder 49. Accordingly, a compression ratio of the mixture gas can be set higher than that in a normal gasoline engine. Moreover, since the first piston 43 and the second piston 46 are opposed to each other inside the cylinder 49, a cylinder head necessary in a general engine is unnecessary, and the configuration of the engine 30 is simple and lightweight. Furthermore, the members forming the engine 30, specifically, the first piston 43, the second piston 46, the first crankshaft 42, the second crankshaft 45, and the like are arranged to be opposed to one another and operate in an opposed manner. Accordingly, vibrations generated by the members of the engine 30 are cancelled out, and a vibration generated from the entire engine 30 to the outside can be reduced. Thus, mounting the engine 30 with a such a structure in the flight device 10 can achieve size reduction, weight reduction, and vibration reduction of the flight device 10. Particularly, reducing the vibration can prevent adverse effects on arithmetic control devices for attitude control, motor output control, and the like and on precision equipment such as a GPS sensor. Moreover, it is possible to prevent breakage of a delivered cargo transported by the flight device 10 due to vibration.

In the present embodiment, the first crankshaft 42 of the first engine part 40 doubles as the first power transmission shaft 26. Specifically, the first crankshaft 42 extends to the center of the first main rotor 141 illustrated in Fig. 1, and is connected to the gear 171. Similarly, the second crankshaft 45 of the second engine part 41 doubles as the second power transmission shaft 27. Specifically, the second crankshaft 45 extends to the center of the second main rotor 142 illustrated in Fig. 1, and is connected to the gear 172.

Moreover, the engine 30 includes an opposite-rotation synchronization mechanism not illustrated herein. The opposite-rotation synchronization mechanism causes the rotating directions of the first crankshaft 42 and the second crankshaft 45 to be opposite to each other. Moreover, the opposite-rotation synchronization mechanism synchronizes the reciprocating motions of the first piston 43 and the second piston 46. Accordingly, in the engine 30, the rotating directions of the first crankshaft 42 and the second crankshaft 45 are opposite to each other in principle. Thus, the first power transmission shaft 26 being an extended shaft of the first crankshaft 42 and the second power transmission shaft 27 being an extended shaft of the second crankshaft 45 rotate in opposite directions without being provided with a dedicate reversal mechanism. Accordingly, the first main rotor 141 and the second main rotor 142 illustrated in Fig. 1 are rotated in opposite directions at the same rotating speed without being provided with the dedicated reversal mechanism.

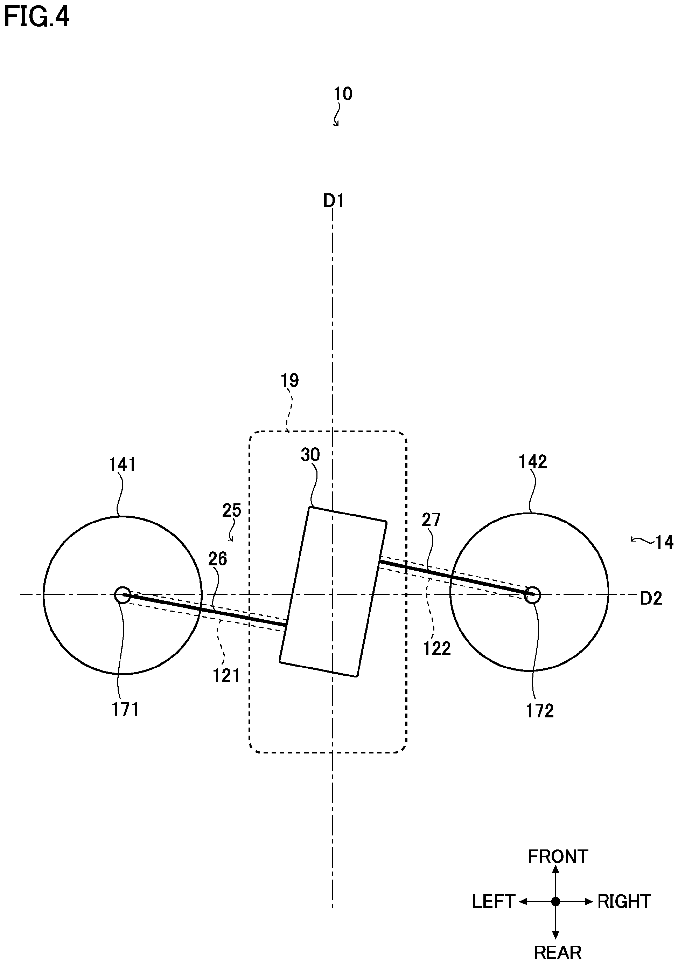

Fig. 4 is a schematic diagram illustrating the flight device 10 according to another mode. A basic configuration of the flight device 10 illustrated in Fig. 4 is substantially the same as that of the flight device 10 illustrated in Fig. 1, and is different in that the flight device 10 illustrated in Fig. 4 includes no sub-rotors 15. In other words, the flight device 10 illustrated in Fig. 4 is an engine drone that includes only the main rotors 14 configured to be mechanically rotated by the drive force of the engine.

The flight device 10 includes only the main rotors 14 as a mechanism for lifting the airframe 19. The main rotors 14 generate the thrust for lifting the airframe 19 into the air, and are also responsible for control of the position and the attitude. Specifically, the main rotors 14 include control mechanisms for controlling the position and the attitude of the flight device 10. For example, pitch control in which pitch angles of the blades of the main rotors 14 are appropriately changed can be adopted as such control mechanisms.

The control mechanisms of the main rotors 14 allow the flight device 10 to perform the hovering state, the ascending state, the descending state, and the horizontal movement state also in the case where the flight device 10 includes no sub-rotors 15.

The present embodiment described above can have the following main effects.

Specifically, since the main rotors 14 are rotated via the power transmission shafts 25 connected to the crankshafts of the engine 30, it is possible to eliminate gears between the crankshafts and the power transmission shafts 25. Accordingly, it is possible to simplify the structure of the drive system of the flight device 10 and reduce loss of power due to gears.

Moreover, since the first main rotor 141 and the second main rotor 142 are rotated via the first power transmission shaft 26 and the second power transmission shaft 27 that are connected to the first crankshaft 42 and the second crankshaft 45 of the engine 30, gears in the drive system can be eliminated. Accordingly, it is possible to simplify the structure of the drive system of the flight device 10 and reduce the loss of power due to gears.

Although the embodiment of the present invention has been described above, the present invention is not limited to this embodiment, and changes can be made within a scope not departing from the gist of the present invention. Moreover, the modes described above can be combined with one another.

With reference to Fig. 3, in the engine 30, the first engine part 40 and the second engine part 41 share the combustion chamber 48. However, the first engine part 40 and the second engine part 41 may individually have combustion chambers.

With reference to Fig. 3, the engine 30 includes the first engine part 40 and the second engine part 41. However, the engine 30 may be formed only of the first engine part 40. In this case, the power from the first engine part 40 is transmitted to the second power transmission shaft 27 via a gear.

With reference to Fig. 1, the first power transmission shaft 26 is formed as the extended shaft of the first crankshaft 42 illustrated in Fig. 3. However, a joint that is unable to rotate relative to the first power transmission shaft 26 may be formed in the middle of the first power transmission shaft 26.

With reference to Figs. 1 and 4, a clutch may be provided between the first crankshaft 42 on the flight device 10 side and the first power transmission shaft 26 on the first main rotor 141 side, that is between the first crankshaft 42 and the first power transmission shaft 26. For example, a centrifugal clutch may be adopted as this clutch. This provides the following effects. When the number of revolutions of the engine 30 is below a predetermined number, the clutch is set to a disconnected state to prevent power transmission from the first crankshaft 42 to the first power transmission shaft 26. Meanwhile, when the number of revolutions of the engine 30 is equal to or above the predetermined number, the clutch is set to a connected state to allow power transmission from the first crankshaft 42 to the first power transmission shaft 26. Such matters also apply to the second crankshaft 45 and the second power transmission shaft 27 illustrated in Fig. 3.

### EXPLANATION OF THE REFERENCE NUMERALS

- 10: flight device
- 121: first main frame
- 122: second main frame
- 131: sub-frame
- 132: sub-frame
- 133: sub-frame
- 134: sub-frame
- 14: main rotor
- 141: first main rotor
- 142: second main rotor
- 15: sub-rotor
- 151: sub-rotor
- 152: sub-rotor
- 153: sub-rotor
- 154: sub-rotor
- 16: power generator
- 161: power generator
- 162: power generator
- 171: gear
- 172: gear
- 18: battery
- 19: airframe
- 21: motor
- 211: motor
- 212: motor
- 213: motor
- 214: motor
- 24: electric power converter
- 241: electric power converter
- 242: electric power converter
- 243: electric power converter
- 244: electric power converter
- 25: power transmission shaft
- 26: first power transmission shaft
- 27: second power transmission shaft
- 30: engine
- 31: arithmetic control unit
- 40: first engine part
- 41: second engine part
- 42: first crankshaft
- 43: first piston
- 44: first connecting rod
- 45: second crankshaft
- 46: second piston
- 47: second connecting rod
- 48: combustion chamber
- 49: cylinder
- D1: first direction
- D2: second direction

## Claims

1. A flight device comprising:
an airframe;
a main rotor;
an engine; and
a power transmission shaft, wherein
the main rotor is rotated to generate drive force that causes the airframe to lift,
the engine includes a crankshaft, and the crankshaft includes a first crankshaft and a second crankshaft,
the power transmission shaft includes a first power transmission shaft connected to the first crankshaft and a second power transmission shaft connected to the second crankshaft,
the main rotor includes a first main rotor and a second main rotor,
the engine rotates the first main rotor via the first power transmission shaft and rotates the second main rotor via the second power transmission shaft, and
when a front-rear direction of the airframe is referred to as first direction and a left-right direction of the airframe is referred to as second direction,
the first power transmission shaft and the second power transmission shaft are tilted with respect to the second direction on a plane including the front-rear direction and the left-right direction, and
the first crankshaft and the second crankshaft are tilted with respect to the second direction on the plane including the front-rear direction and the left-right direction.

2. A flight device comprising:
an airframe;
a main rotor;
an engine; and
a power transmission shaft, wherein
the main rotor is rotated to generate drive force that causes the airframe to lift,
the engine rotates the main rotor via the power transmission shaft, and includes a first engine part and a second engine part,
the first engine part includes a first crankshaft,
the second engine part includes a second crankshaft,
the power transmission shaft includes a first power transmission shaft connected to the first crankshaft and a second power transmission shaft connected to the second crankshaft,
the main rotor includes a first main rotor configured to be rotated by power transmitted via the first power transmission shaft and a second main rotor configured to be rotated by power transmitted via the second power transmission shaft, and
when a front-rear direction of the airframe is referred to as first direction and a left-right direction of the airframe is referred to as second direction,
the first power transmission shaft and the second power transmission shaft are tilted with respect to the second direction on a plane including the front-rear direction and the left-right direction, and
the first crankshaft and the second crankshaft are tilted with respect to the second direction on the plane including the front-rear direction and the left-right direction.

3. The flight device according to claim 2, wherein
the first power transmission shaft is tilted forward while extending in a direction away from the airframe on the plane including the front-rear direction and the left-right direction, and
the second power transmission shaft is tilted rearward while extending in a direction away from the airframe on the plane including the front-rear direction and the left-right direction.

4. The flight device according to any one of claims 1 to 3, wherein
a clutch is provided between the first crankshaft and the first power transmission shaft, and
a clutch is provided between the second crankshaft and the second power transmission shaft.

5. The flight device according to any one of claims 1 to 3, wherein
the first crankshaft is tilted forward while extending in a direction away from the airframe on the plane including the front-rear direction and the left-right direction, and
the second crankshaft is tilted rearward while extending in a direction away from the airframe on the plane including the front-rear direction and the left-right direction.

6. The flight device according to claim 2, wherein a rotation center of the first main rotor and a rotation center of the second main rotor are arranged along the second direction.
